(19) Europäisches Patentamt
European Patent Office
Office européen des brevets

(11) **EP 4 156 331 A1**

(12) **EUROPEAN PATENT APPLICATION**
published in accordance with Art. 153(4) EPC

(43) Date of publication:
**29.03.2023 Bulletin 2023/13**

(21) Application number: **21826191.5**

(22) Date of filing: **01.06.2021**

(51) International Patent Classification (IPC):
**H01M 4/36** (2006.01)   **H01M 4/48** (2006.01)
**H01M 4/62** (2006.01)

(52) Cooperative Patent Classification (CPC):
**H01M 4/36; H01M 4/38; H01M 4/48; H01M 4/62;
H01M 10/0525;** Y02E 60/10

(86) International application number:
**PCT/CN2021/097741**

(87) International publication number:
**WO 2021/254142 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2020 CN 202010563797**

(71) Applicant: **Lanxi Zhide Advanced Materials Co.,
Ltd.
Zhejiang 321100 (CN)**

(72) Inventors:
• **CHEN, Qinghua**
  **Jinhua, Zhejiang 321100 (CN)**
• **HU, Pan**
  **Jinhua, Zhejiang 321100 (CN)**
• **FANG, Bing**
  **Jinhua, Zhejiang 321100 (CN)**

(74) Representative: **Berggren Oy
P.O. Box 16
Eteläinen Rautatiekatu 10A
00101 Helsinki (FI)**

(54) **SILICON-CARBON COMPOSITE MATERIAL FOR SECONDARY LITHIUM BATTERY AND PREPARATION METHOD THEREFOR**

(57)    Disclosed are a silicon-carbon composite material for a secondary lithium battery and a preparation method therefor. The silicon-carbon composite material for a secondary lithium battery comprises a core containing a silicon-based material, a first coating layer, and a second coating layer. The first coating layer is an electrically conductive layer, the second coating layer is an ion-conducting layer, and the first coating layer and the second coating layer are not limited to a certain order. In the silicon-carbon composite material provided by the present disclosure, the coating layer is a composite material, which combines the electroconductive (or ion-conducting) capability of a matrix material, and the reinforcing and toughening properties of a reinforcing phase, such that the material has a strong anti-expansion capability. In the secondary battery, the coating layer is less prone to breaking, which results in less fresh surface and so reduces the consumption of an electrolyte and improves the cycle performance of the battery. Additionally, the preparation method of the present disclosure is simple and easy to implement, and is suitable for large-scale industrial production.

Fig.1

EP 4 156 331 A1

## Description

### Technical Field

The present disclosure relates to the field of a lithium ion battery material, in particular to a silicon-carbon anode material for a secondary lithium battery and a preparation method therefor.

### Background

In recent years, the substitution of silicon-based material for carbon material as the anode material for lithium ion batteries has become a research hotspot in academia and industry. However, the volume expansion effect of silicon during lithium alloying is particularly serious, which will lead to severe pulverization of electrode materials, collapse of electrode structures, and loss of electrical contact between the active material and the current collector, resulting in poor battery cycle performance. The problem of volume expansion can be solved by controlling the silicon content in carbon material or reducing the silicon particle size to a nanometer level; changing the texture and morphology of graphite to achieve the best matching between carbon and silicon; or coating silicon with other materials to promote its volume recovery after expansion. Preparing composite material by compounding silicon and metal or nonmetal material, can also release the stress caused by volume change, providing space for volume expansion.

It has been proved that in order to obtain ideal electrochemical performance, the size of silicon particles in the composite material should be lower than 300 nm, better lower than 200 nm. However, technically, it's quite difficult to achieve the key structure indicators such as certain specific surface area, particle size distribution, impurities, and thickness of surface passivation layers, etc., and it hasn't been achieved yet till now.

### Summary

In order to overcome the disadvantages of silicon-based material in the prior art, including low strength, low rate and short life, the present disclosure provides a silicon-carbon composite material with superior electronical and mechenical performance in a secondary lithium battery, including high strength, high rate and long life, and a preparation method therefor.

In one embodiment, the present disclosure provides a silicon-carbon composite material comprising a core containing a silicon-based material and its surface coating layers, including a first coating layer and a second coating layer, wherein the first coating layer is an electrically conductive layer, the second coating layer is an ion-conducting layer, and the first coating layer and the second coating layer are not limited to a certain order.

In a further embodiment, the present disclosure provides a method for preparing the above silicon-carbon composite material, and the method comprises: a precursor process, a coating process of the first coating layer, a pre-lithiation process and a coating process of the second coating layer.

Compared with the prior art, the silicon-carbon composite material for a secondary lithium battery provided by the present disclosure and the preparation method therefor have the following beneficial effects:

(1) In terms of material structure, as a composite material, the coating layer combines the electroconductive (or ion-conducting) capability of a matrix material, and the reinforcing and toughening properties of a reinforcing phase, preventing it crack easily after the expansion of the silicon-based core. In secondary batteries, the coating layer which won't crack easily means less fresh surface, less electrolyte consumption, and better cycle performance.

(2) The coating layer of the carbon composite can effectively buffer the volume expansion of the core and improve the electronic conductivity; on the other hand, the coating layer of the ionic conductor composite material can provide ion-conducting channels and enhance the ion-conducting capability of the material, such that the anode material can be used to prepare a lithium ion battery with long life and high rate.

(3) In terms of preparation process, if the electrically conductive layer is coated merely, the processing performance will be poor, with unstable slurry, but the initial coulombic efficiency is high; if the ion-conducting layer is coated merely, it cannot prevent the volume expansion of the silicon-based core, resulting in poor cycle stability, but the material processing performance is better, with the most stable slurry. Double layer coating can combine the advantages of both the electrically conductive layer and the ion-conducting layer so as to improve material performance.

### Brief Description of the Drawings

The accompanying drawings of the description, which form a part of the present disclosure, are used to provide a further understanding of the disclosure. The illustrative examples and their descriptions of the disclosure are used to explain the disclosure, and do not constitute an improper limitation thereto. In the accompanying drawings:

Fig. 1 shows the XRD spectrum of the silicon-carbon composite material prepared according to Example 1 of the disclosure;

Fig. 2 shows the XRD spectrum of the silicon-carbon composite material prepared according to Example 2 of the disclosure;

Fig. 3 shows the XRD spectrum of the silicon-carbon composite material prepared according to Example 11 of the disclosure.

## Detailed Description of the Embodiments

It should be noted that the embodiments and features in the embodiments in the disclosure can be combined with each other without conflict. The embodiments of the present disclosure will be described in detail hereinafter. The embodiments of the present disclosure shall not be construed as restrictions to the present disclosure.

In the present disclosure, quantity, ratio and other values are presented in a range format. It should be understood that such range format is used for convenience and conciseness, and should be flexibly understood that it includes not only the values explicitly designated as range limits, but also all individual values or sub ranges covered within said range, as if each value and sub range were explicitly designated.

In the present disclosure, $D_{50}$ is the particle size corresponding to the cumulative volume percentage of the material reaching 50%, and the unit is $\mu$m.

In the claims and the specific embodiments, the list of items connected by the terms "one of or a combination of more of", "at least one of" or other similar terms may mean any combination of the listed items. For example, if items A and B are listed, the phrase "one of or a combination of more of A and B" means only A; only B; or A and B; and if items A and B are listed, the phrase "at least one of A and B" means only A; B only; or A and B. Item A can contain a single element or multiple elements, and item B can contain a single element or multiple elements.

I. Silicon-carbon composite material

The embodiments of the present disclosure provide a silicon-carbon composite material for a secondary lithium battery comprising a core containing a silicon-based material and its surface coating layers, including a first coating layer and a second coating layer, wherein the first coating layer is an electrically conductive layer, the second coating layer is an ion-conducting layer, and the first coating layer and the second coating layer are not limited to a certain order. Specifically, it can be as follows: the first coating layer is coated on the surface of the core, and the second coating layer is coated on the surface of the first coating layer; alternatively, the second coating layer is coated on the surface of the core, and the first coating layer is coated on the surface of the second coating layer.

In some embodiments, the first coating layer comprises carbon composite material, or a combination of carbon composite material and ionic conductor composite material, and the mass percentage of the carbon composite material is 90 to 100%, preferably 97 to 100%, as calculated by the total mass of the first coating layer of 100%, so as to ensure the electroconductive capability and the anti-expansion capability of the first coating layer.

In some embodiments, the second coating layer comprises ionic conductor composite material, or a combination of ionic conductor composite material and carbon composite material, and the mass percentage of the ionic conductor composite material is 90 to 100%, preferably 97 to 100%, as calculated by the total mass of the second coating layer of 100%, so as to ensure the ion-conducting capability and the capability of stabilizing SEI membrane of the second coating layer.

In some embodiments, the mass percentage of the silicon-based material core is 80 to 99%, preferably 92 to 96%, as calculated by the total mass of the silicon carbon composite material of 100%. Within this range, the anode material shows high specific capacity and excellent cycle performance.

In some embodiments, the carbon composite material comprises a carbon reinforcing phase and a carbon matrix. The carbon reinforcing phase and the carbon matrix are compounded to form a reinforced concrete-like structure. When the expansion stress in the silicon-based material core is transferred to the carbon composite material, it is transferred to the carbon reinforcing phase through the continuous phase carbon matrix. The carbon reinforcing phase prevents the material particles from cracking by absorbing or balancing the stress. In some embodiments, the mass ratio of carbon reinforcing phase to carbon matrix is 0.1 to 1:1, preferably 0.15 to 0.5:1. If the mass ratio is less than 0.1:1, less carbon reinforcing phase, resulting in poor reinforcing effect of the carbon composite material, the material structure will be easy to collapse; and if the mass ratio is greater than 1:1, less carbon matrix, it will result in poor electroconductive property of the material, and the carbon matrix being incapable of fixing and adhering to the reinforcing phase.

In some embodiments, the carbon reinforcing phase comprises one of or a combination of more of carbon nanotubes, carbon black, carbon fibers, graphene and porous carbon, and the carbon matrix comprises one of or a combination of more of asphalt carbon, resin carbon and gas phase pyrolysis carbon.

In some embodiments, the ionic conductor composite material comprises an ionic reinforcing phase and an ionic matrix. The ionic reinforcing phase and the ionic matrix are organically combined to form a reinforced concrete-like structure. The ionic conductor composite material combines the advantages of the high strength of the ionic matrix and the high toughness of the ionic reinforcing phase, effectively preventing stress dispersion, better buffering volume expansion, and improving the structural strength. The high-strength ionic matrix maintains the basic structure of the coating layer, and provides main ion conducting channels. In some embodiments, the mass ratio of the ionic reinforcing phase to the ionic matrix is 0.1 to 1:1, preferably 0.15 to 0.5:1. If the mass ratio is less than 0.1:1, less ionic reinforcing phase, resulting in poor reinforcing effect of the ionic composite material, the ionic conductor composite material layer will be of too high strength, high brittleness, and easy to crack; if the mass ratio is greater than 1:1, less ionic conductor matrix, it will provide less ion conducting channels, resulting in no significant improvement in the material rate performance.

In some embodiments, the ionic reinforcing phase comprises at least one of fibers, whiskers and particles, and preferably one or more selected from the groups consisting of aramid fibers, polyethylene fibers, nylon fibers, glass fibers, $Al_2O_3$ fibers, SiC fibers, BN fibers, $Si_3N_4$ fibers, TiC fibers, TiN fibers, $B_4C$ fibers and ceramic fibers; the whiskers are one or more selected from the groups consisting of SiC whiskers, $K_2TiO_3$ whiskers, aluminum borate whiskers, $CaSO_4$ whiskers, CaCOs whiskers, $Al_2O_3$ whiskers, ZnO whiskers and MgO whiskers; and the particles are one or more selected from the groups consisting of SiC particles, $Al_2O_3$ particles, BN particles, $Si_3N_4$ particles, TiC particles and $B_4C$ particles.

In some embodiments, the ionic matrix comprises fast ionic conductor material, including but not limited to one of or a combination of more of LISICON type solid electrolyte, NASICION type solid electrolyte, perovskite type solid electrolyte, garnet type solid electrolyte, sulfide solid electrolyte, and PEO-based polymer electrolyte; preferably one of or a combination of more of $Al_2O_3$, $TiO_2$, $ZrO_2$, $V_2O_5$, ZnO, CoO, $P_2O_5$, $B_2O_3$, $SiO_2$, $AlPO_4$, $Co_3(PO_4)_3$, $Al(PO_3)_3$, $LiPO_3$, $Co(PO_3)_2$, LiF, $AlF_3$, $FeF_2$, $Li_3PO_4$, $LiM_2(PO_4)_3$ (M=Ge, Ti, Zr, Sn), $Li_{3x}La_{2/3-x}TiO_3$ (x>0), $Li_5La_3A_2O_{12}$ (A=Nb, Ta, Sb, Bi), $Li_7La_3B_2O_{12}$ (B=Zr, Sn), $Li_2ZnGeS_4$, and $Li_{10}GeP_2O_{12}$.

In some embodiments, the core also comprises lithium compounds, and the peak intensity attributing to $Li_2SiO_3$ at $2\theta=26.9\pm0.2°$ is the strongest in the x-ray diffraction pattern with Cu-K$\alpha$ radiation. The purpose of lithium compound doping is to improve the initial coulombic efficiency, and it mainly presents in the silicon-based material in the form of lithium silicate salts. With the increased doping amount of Li, the lithium silicate changes as $Li_2Si_2O_5$, $Li_2SiO_3$, and $Li_4SiO_4$ in turn, and excessive Li doping will lead to unstable slurry. The inventor unexpectedly found that when the content of $Li_2SiO_3$ was the highest, the material had the highest initial coulombic efficiency and the best processability.

In some embodiments, the thickness of the first coating layer is 2 to 1,000 nm, preferably 5 to 200 nm, and the thickness of the second coating layer is 1 to 100 nm, preferably 2 to 20 nm. When the thickness of the coating layer is in a certain range, the high capacity and high rate performance of the silicon carbon composite material are further improved.

II. Preparation method

The preparation method provided by the present disclosure comprises the following processes: a precursor process, a coating process of the first coating layer, a pre-lithiation process and a coating process of the second coating layer;

the precursor process refers to chemical vapor deposition or high-temperature vacuum deposition of a silicon raw material to obtain a $SiO_x$ precursor (where 0<x<2);

the coating process of the first coating layer refers to the coating of an electrically conductive layer to the $SiO_x$ precursor or to the lithium-doped active particles by a chemical vapor deposition method;

the (optional) pre-lithiation process refers to insertion of lithium into the above coated material and generation of lithium silicate inside the silicon oxide compound, and then obtaining the lithium-doped active particles;

the coating process of the second coating layer refers to mixing the $SiO_x$ precursor or the lithium-doped active particles with an ionic reinforcing phase and an ionic matrix, dispersing the mixture into pure water evenly, and then filtering the mixed solution and drying to perform the coating of the ion-conducting layer; and

the order of the coating process of the first coating layer and the coating process of the second coating layer can be interchanged. Specifically, the order of the preparation method process is with the turn of the precursor process, the coating process of the first coating layer, the pre-lithiation process, and the coating process of the second coating layer; or with the turn of the precursor process, the coating process of the second coating layer, the pre-lithiation process, and the coating process of the first coating layer.

In some embodiments, the precursor process refers to placing the silicon raw material in a chemical vapor deposition (CVD) furnace or a vacuum furnace, heating for 2 to 28 hours (e.g. 2 to 8 hours) under the conditions of a temperature of 900 to 1,300 °C and an atmospheric pressure of 0 to 5,000 Pa to generate SiO gas, and then cooling the SiO gas into blocks at a certain temperature, breaking same and sieving to obtain the $SiO_x$ (0<x<2) precursor with a particle size $D_{50}$ of 1 to 10 um; wherein the silicon raw material is preferable a mixture of silicon dioxide powder and elemental silicon powder; and the physical properties of the silicon raw material are not limited.

In some embodiments, the coating process of the first coating layer refers to dissolving the carbon reinforcing material in a solvent, and loading the carbon reinforcing material on the surface of the $SiO_x$ precursor or on the lithium-doped active particles by filtering and drying, and then coating the carbon matrix by vapor deposition; wherein the vapor deposition temperature is 500 to 1,000 °C, and the solvent includes pure water, ethanol, toluene, and xylene or a combination thereof.

In some embodiments, the pre-lithiation process refers to one or more methods such as vapor phase CVD method, thermal doping method, redox method or electrochemical method to achieve the purpose of doping lithium silicate salt.

In some embodiments, the secondary coating process refers to dispersing the $SiO_x$ precursor or the lithium-doped active particles in a solvent, adding a certain amount of the ionic reinforcing material and the ionic matrix, stirring to make it mixed evenly, then filtering and drying; wherein the solvent includes pure water, ethanol, toluene, and xylene or a combination thereof.

In order to better understand the preparation process and performance characteristics of the materials proposed by the present disclosure, they will be described below in combination with specific examples. The experimental methods in the following examples are all conventional methods, unless otherwise specified. Reagents and materials can be obtained commercially, unless otherwise specified.

III. Examples

Example 1

A certain amount of Si powder was mixed with $SiO_2$ powder uniformly, the mixture was added to a vacuum furnace for the heat treatment, which was under the condition of a vacuum degree of 500 Pa and heated to 1,200 °C and then held for 1 hour. The above powder was sublimated under conditions of high temperature and vacuum, the vapor was condensed, and the obtained solid was then broken, sieved to obtain the silicon sub-oxide precursor particles with a particle size of 1 to 10 $\mu$m.

The particles obtained above were dispersed into pure water evenly, then CNT (carbon nanotubes) of 1 wt% were added therein, continuously stirred until the mixture was homogeneous, then filtered and dried. The obtained silicon sub-oxide particles are attached with CNT on the surface. The particles obtained in the previous step were put into a CVD furnace, heated to 950°C, then acetylene with a flow rate of 9 L/min, hydrogen with a flow rate of 9 L/min, and argon with a flow rate of 18 L/min were introduced therein for a deposition time of 1 hour. Acetylene was pyrolyzed at high temperature to form pyrolytic carbon, which was coated on the surface of CNT and particles, forming the first coating layer. The first coating layer is carbon composite material, wherein CNT are the reinforcing phase, and the pyrolytic carbon is the matrix. The mass ratio of CNT to pyrolytic carbon is 0.3:1, and the thickness of the first coating layer is 60 nm.

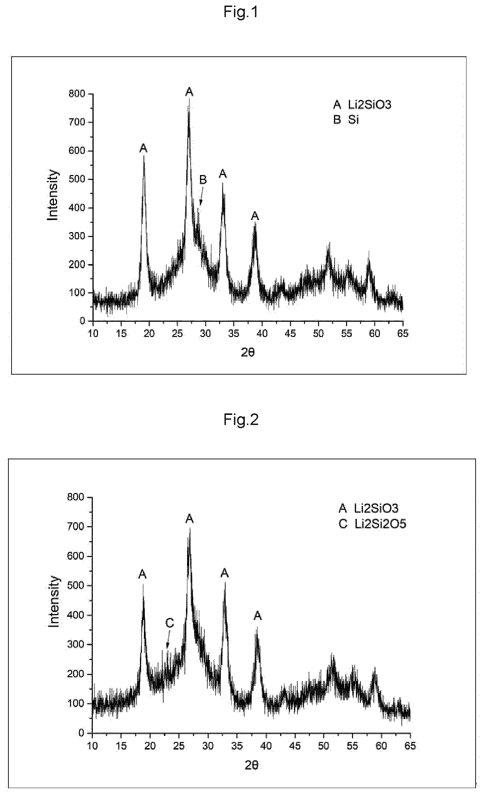

The above obtained composite powder were mixed evenly with a certain amount of $Li_3N$ powder, and the mixture were added to the high-temperature furnace at the same time for heat treatment. $Li_3N$ was pyrolyzed at a high-temperature of 700 to 900°C for 1 to 3 hours, and active lithium was inserted into the silicon sub-oxide to complete pre-lithiation, so as to obtain the lithium-doped anode active material particles. The anode active material particles were analyzed with an X-ray diffraction analyzer (D8 ADVANCE Model). Fig. 1 shows the XRD diffraction spectrum obtained in Example 1. It can be seen that among the diffraction peaks obtained by X-ray diffraction, the diffraction peak attributing to $Li_2SiO_3$ near the diffraction angle of $2\theta$ at 26.9° shows the maximum intensity.

The Li-doped particles obtained above were dispersed into pure water evenly, then lithium phosphate whiskers and lithium phosphate particles (the mass ratio of lithium phosphate whiskers to lithium phosphate particles was 0.2:1) were added therein, with a mass fraction of 3%. The mixture was continuously stirred until it was homogeneous, then filtered and dried, the lithium phosphate whiskers and lithium phosphate particles were attached to the particle surface, forming the second coating layer. The second coating layer is ionic composite material, where the whiskers are the reinforcing phase and lithium phosphate (fast ionic conductor material) the matrix, and the thickness of the second coating layer is 6 nm. The mass ratio of silicon-based material core measured by inductively coupled plasma spectrometer (ICP, Optima 2100 DV) is 95%.

Example 2

This Example was performed according to the same preparation method as Example 1, the difference lied in that the ion-conducting layer was coated first (the second coating layer), after which the electrically conductive layer (the first coating layer) was coated.

The specific processes were as follows:

A certain amount of Si powder was mixed with $SiO_2$ powder uniformly, the mixture was added to a vacuum furnace for the heat treatment, which was under the condition of a vacuum degree of 500 Pa and heated to 1,200 °C and then held for 1 hour. The above powder was sublimated under conditions of high temperature and vacuum, the vapor was condensed, and the obtained solid was then broken, sieved to obtain the silicon sub-oxide precursor particles with a particle size of 1 to 10 μm.

The silicon sub-oxide precursor particles obtained above were dispersed into pure water evenly, then a mass fraction of 3% of lithium phosphate whiskers and lithium phosphate particles (the mass ratio of lithium phosphate whiskers to lithium phosphate particles was 0.2:1) were added therein, continuously stirred until the mixture was homogeneous, then filtered and dried, the lithium phosphate whiskers and lithium phosphate particles were attached to the particle surface, forming the second coating layer. The second coating layer is ionic composite material, where the whiskers are the reinforcing phase and lithium phosphate the matrix, and the thickness of the second coating layer is 6 nm.

The above particles coated with the second coating layer were mixed evenly with a certain amount of $Li_3N$ powder, and the mixture were added to the high-temperature furnace at the same time for heat treatment at 700 to 900°C for 1 to 3 hours. $Li_3N$ was pyrolyzed at a high-temperature, and active lithium was inserted into the silicon sub-oxide to complete pre-lithiation, so as to obtain the lithium-doped anode active material particles. The anode active material particles were analyzed with an X-ray diffraction analyzer (D8 ADVANCE Model). Fig. 2 shows the XRD diffraction spectrum obtained in Example 2. It can be seen that among the diffraction peaks obtained by X-ray diffraction, the diffraction peak attributing to $Li_2SiO_3$ near the diffraction angle of $2\theta$ at 26.9° shows the maximum intensity.

The Li-doped particles obtained above were dispersed into pure water evenly, then CNT (carbon nanotubes) of 1 wt% were added therein, continuously stirred until the mixture was homogeneous, then filtered and dried. The obtained silicon sub-oxide particles are attached with CNT on the surface. The particles obtained in the previous step were put into a CVD furnace, heated to 950 °C, then acetylene with a flow rate of 9 L/min, hydrogen with a flow rate of 9 L/min, and argon with a flow rate of 18 L/min were introduced therein for a deposition time of 1 hour. Acetylene was pyrolyzed at high temperature to form pyrolytic carbon, which was coated on the surface of CNT and particles, forming the first coating layer. The first coating layer is carbon composite material, where CNT are the reinforcing phase, the pyrolytic carbon is the matrix. The mass ratio of CNT to pyrolytic carbon is 0.3:1, and the thickness of the first coating layer is 60 nm.

Examples 3-6

These Examples were performed according to the same preparation method as Example 1, the difference lied in that the reinforcing phase and matrix of the coating layer as well as the mass ratio of the reinforcing phase to the matrix were different.

Example 7

This Example was performed according to the same preparation method as Example 1, the difference lied in that the first coating layer also contained an ion conducting composite material composed of lithium phosphate whiskers and lithium phosphate particles.

Example 8

This Example was performed according to the same preparation method as Example 1, the difference lied in that the second coating layer also contained an electrically conductive composite material composed of CNT and pyrolytic carbon.

Examples 9-10

These Examples were performed according to the same preparation method as Example 1, the difference lied in that the first coating layer also contained an ion conducting composite material composed of lithium phosphate whiskers and lithium phosphate particles in a mass ratio of 0.2:1, and the second coating layer also contained an electrically conductive composite material composed of CNT and pyrolytic carbon in a mass ratio of 0.3:1.

Comparative example 1

A certain amount of Si powder was mixed with $SiO_2$ powder uniformly, the mixture was added to a vacuum furnace for heat treatment, and heated to 1,200 °C under the condition of a vacuum degree of 500 Pa for a heat treatment time of 1 hour. The above powder was sublimated under conditions of high temperature and vacuum, the vapor was condensed, broken, sieved to obtain the silicon sub-oxide precursor particles with a particle size of 1 to 10 um. The precursor particles were heated to 950 °C in a CVD furnace, the vacuum degree in the furnace was controlled at 300 Pa, and acetylene with a flow rate of 9 L/min and argon with a flow rate of 18 L/min were introduced, the deposition time was 1 hour, and carbon coated silicon particles were obtained, with a carbon coating layer thickness of 60 nm. The carbon coated silicon particles and a certain amount of $Li_3N$ powder were mixed evenly, and added to the high-temperature furnace at the same time for heat treatment. $Li_3N$ was pyrolyzed at a high-temperature, and active lithium was inserted into the silicon sub-oxide to complete pre-lithiation, so as to obtain the lithium-doped anode active particles. The lithium-doped anode active particles were mixed with 1.5 wt% of $LiPO_3$, pure water was added therein, stirred until the mixture was homogeneous, then filtered and dried to obtain the desired $SiO/C/LiPO_3$ composite powder, wherein the thickness of $LiPO_3$ coating layer was 6 nm.

The difference between Comparative example 1 and Example 1 lies in that the coating layers of Comparative example 1 were all continuous phase.

Example 11

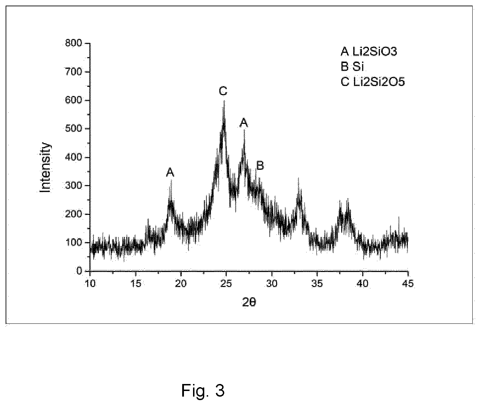

Other steps and process parameters were the same as those in Example 1, the difference lied in that the weight ratio of lithium nitride and carbon coated silicon particles was changed, which changed the doping degree of Li. The anode active material particles of Example 11 were analyzed with an X-ray diffraction analyzer (D8 ADVANCE Model). Fig. 3 shows the XRD diffraction spectrum obtained in Example 11. It can be seen that among the diffraction peaks obtained by X-ray diffraction, the diffraction peak attributing to $Li_2Si_2O_5$ near a diffraction angle 2 $\theta$ at 24.5° shows the maximum intensity.

Test method

1. Test of initial coulombic efficiency. The prepared anode material powder, SP (carbon black), CNT (carbon nanotubes) and PAA (polyacrylic acid) were mixed according to a mass ratio of 80:9:1:10, a proper amount of deionized water was added as the solvent, and continuously stirred for 8 hours with a magnetic stirrer to be pasty. The well stirred slurry was poured onto a copper foil with a thickness of 9 $\mu$m, after coating with an experimental coater, dried for 6 hours under vacuum (- 0.1MPa) at 85°C to obtain an anode electrode sheet. The electrode sheet was rolled to 100 $\mu$m on a manual twin roller. Then, a wafer with a diameter of 12 mm was made by a sheet-punching machine, which was dried for 8 hours under vacuum (- 0.1MPa) at 85°C, weighed and calculated the weight of the active material. CR2032 type button battery was assembled in a glove box with lithium metal sheet as the counter electrode, polypropylene microporous membrane as the diaphragm, 1 mol/L $LiPF_6$ in EC:DEC=1:1 Vol% with 5.0%FEC as the electrolyte. After standing at room temperature for 12 hours, the as-prepared button battery was taken to perform the constant current charge-discharge test in the Blue electric LAND battery test system for charging and discharging at 0.1C current, the cut-off voltage for delithiation was 1.5V, so as to obtain the initial coulombic efficiency of the anode material.

2. Expansion rate test. A charge-discharge test with a Blue electric LAND battery test system was carried out for the CR2032 type button battery prepared by the above method.. After standing for 6 hours, the battery was discharged to 0.005V at 0.05C, and then discharged to 0.005V at 0.01C; after standing for 5 minutes, charged to 1.5V at 0.05C constant current; after standing for 5 minutes, the above steps were repeated twice; then discharged to 0.005V at 0.25C; after standing for 5 minutes, charged to 1.5V at 0.25C constant current, and after 20 cycles, the button battery was disassembled in a glove box, and then the thickness of the electrode sheet was measured. The expansion rate was calculated according to the equation: (thickness of electrode sheet after circulation - thickness of fresh electrode sheet)/thickness of fresh electrode sheet × 100%.

3. Electronic conductivity test. Using the four-wire and two-terminal method, the resistance was determined by measuring the voltage at both ends of the resistance to be measured and the electric current flowing through the resistance, then combining with the height and the base area of the resistance, the conductivity could be calculated. A certain amount of powder was taken and added to the test mold with certain base area (S), which was gently shaken, then the gasket on the mold was placed on the sample, after the sample loading was completed, the mold was placed on the worktable of the electronic pressure tester, the pressure was increased to 500 kg (159 MPa) at a rate of 5 mm/min, maintained the pressure for 60 seconds, and then depressurized to 0. When the constant pressure of the sample reached 5000 ± 2kg (about 15 to 25 seconds after the pressure was increased to 5000kg), the pressure of the sample was recorded, and the final height (L) of the sample was read, the displayed value of the resistance tester (R) at this time was recorded, then the electronic conductivity was calculated using Formula (I).

$$C = \frac{1}{\rho} = \frac{L}{S * R} \quad (I)$$

4. Lithium ion conductivity test: A charge-discharge test with a Blue electric LAND battery test system was carried out for the CR2032 type button battery prepared by the above method. After standing for 6 hours, the battery was discharged to 0.005V at 0.05C, and then discharged to 0.005V at 0.01C; after standing for 5 minutes, charged to 1.5V at 0.05C constant current; after standing for 5 minutes, the above steps were repeated twice, then the electrochemical impedance spectroscopy test for the button battery was carried out with an electrochemical workstation. The frequency range was 0.01 to 105 Hz, and the voltage amplitude was 0.005V. The last five data points obtained from the test were taken to obtain the linear slope of Z' to rotation rate $w^{-0.5}$ at low frequencies. This slope value was the warburg parameter. Under the same test conditions, the smaller the warburg parameter was, the higher the lithium ion conductivity was.

5. Capacity retention rate test. The prepared anode material powder was mixed with graphite anode (in a mass ratio of 20:80) to obtain a mixed anode powder, and then the mixed anode powder, SP, CNT, CMC (sodium carboxymethyl cellulose), and SBR (styrene butadiene rubber) were mixed according to a mass ratio of 95.2:0.85:0.15:1.2:2.6, and continuously stirred for 8 hours with a magnetic stirrer to be pasty. The well stirred anode slurry was poured onto a copper foil with a thickness of 9 $\mu$m, after coating with an experimental coater, dried for 6 hours under vacuum (-0.1MPa) at 85°C to obtain an anode electrode sheet. Next, 811 cathode material, SP, CNT, and PVDF (polyvinylidene fluoride) were mixed according to a mass ratio of 90:2:1:7, then an appropriate amount of NMP (N-methylpyrrolidone) was added as the solvent, and continuously stirred for 8 hours with a magnetic stirrer to be pasty. The well stirred slurry was poured onto an aluminum foil with a thickness of 16 $\mu$m, after coating with an experimental coater, dried for 6 hours under vacuum (-0.1MPa) at 85 °C to obtain a cathode electrode sheet. The cathode and anode electrode sheets were rolled to 100 $\mu$m on a manual twin roller successively. Then, a wafer with a diameter of 12 mm was made by a sheet-punching machine, which was dried for 8 hours under vacuum (-0.1MPa) at 85 °C, weighed and calculated the weight of the active material. CR2032 type button full battery was assembled in a glove box with polypropylene microporous membrane as the diaphragm, 1 mol/L LiPF$_6$ in EC:DEC=1:1 Vol% with 5.0% FEC as the electrolyte. After standing at room temperature for 12 hours, the as-prepared button full battery was taken to perform the constant current charge-discharge test in the Blue electric test system for charging and discharging at 0.25C current, the cut-off voltage for charging and discharging was 3.0 to 4.25V. The capacity retention rate was calculated according to discharge capacity of the 100th cycle/discharge capacity of the first cycle × 100%.

6. Rate performance test. A constant current charge-discharge test in the Blue electric test system was carried out for the as-prepared button full battery after standing at room temperature for 12 hours. The cut-off voltage for charging and discharging was 3.0 to 4.25 V, and the button full battery was charged and discharged at 0.25C current firstly for 3 cycles. Then, it was charged and discharged at 0.5C current for 3 cycles. Finally, it was charged and discharged at 1C current for 3 cycles. The capacity retention rate was calculated according to discharge capacity of the 9th cycle/discharge capacity of the first cycle × 100%, and it was considered that the higher the value was, the better the rate performance.

The test results of each Example and Comparative example are shown in Table 1 and Table 2.

Table 1 Comparison of Test Results from Examples 1-6, 10 and Comparative example 1

| | First coating layer | Second coating layer | Expansion rate (%) | Electronic conductivity (S/cm) | Warburg parameter | Initial coulombic efficiency (%) | Capacity retention rate after 100 cycles (%) | Rate performance 1C/0.25C (%) |
|---|---|---|---|---|---|---|---|---|
| Example 1 | CNT: pyrolytic carbon = 0.3:1 (intermedia te layer) | Lithium phosphate whiskers : Lithium phosphate matrix = 0.2:1 (outer layer) | 40.12 | 1.20 | 4.50 | 91 | 89 | 82 |
| Example 2 | CNT: pyrolytic carbon = 0.3:1 (outer layer) | Lithium phosphate whiskers : Lithium phosphate matrix = 0.2:1 (intermediate layer) | 41.24 | 1.10 | 4.46 | 90 | 90 | 80 |
| Example 3 | Graphene : asphalt carbon = 0.15:1 | $Al_2O_3$ fibers : $Al_2O_3$ matrix = 0.5:1 | 40.78 | 1.15 | 4.49 | 90 | 88 | 81 |
| Example 4 | Carbon fibers : resin carbon = 0.1:1 | MgO whiskers : polyethylene oxide = 0.15:1 | 41.56 | 1.08 | 4.52 | 90 | 88 | 80 |
| Example 5 | Carbon black : asphalt carbon = 1:1 | TiC particles : $TiO_2$ matrix = 0.1: 1 | 40.98 | 1.14 | 4.59 | 90 | 89 | 79 |
| Example 6 | Porous carbon : resin carbon = 0.5:1 | SiC particles : $SO_2$ matrix = 1:1 | 41.01 | 1.11 | 4.48 | 91 | 88 | 81 |
| Comparative example 1 | Pyrolytic carbon | Lithium phosphate | 49.57 | 1.94 | 4.72 | 89 | 88 | 80 |
| Example 11 | CNT: pyrolytic carbon = 0.3:1 | Lithium phosphate whiskers : Lithium phosphate matrix = 0.2:1 | 40.15 | 1.45 | 4.47 | 86 | 87 | 79 |

The carbon fibers in Table 1 has a diameter of 0.1 to 1 $\mu$m and a length of 1 to 5 $\mu$m, the resin carbon is phenolic resin carbon or epoxy resin carbon, and there is no significant difference between the two when they are applied to the corresponding examples, the porous carbon is activated carbon.

It can be seen from Table 1 that when the coating layer is a composite material having a reinforced concrete-like structure, the material shows low expansion rate and excellent electrochemical performance, and by controlling the mass ratio of reinforcing phase to matrix, the material can obtain the best comprehensive performance. It can be seen from Example 11 and Example 1 that a better initial coulombic efficiency can be obtained with an appropriate Li doping amount.

Table 2 Comparison of Test Results from Example 1 and Examples 7-10

| | First coating layer | | Second coating layer | | Expansion rate (%) | Electro nic conductivity (S/cm) | Warb urg para meter | Initial coulo mbic efficie ncy (%) | Capacity retention rate after 100 cycles (%) | Rate perfor mance 1C/ 0.2 5C (%) |
|---|---|---|---|---|---|---|---|---|---|---|
| | Mass ratio of electricall y conductiv e composit e materials | Mass ratio of ion conduct ing compos ite materia ls | Mass ratio of electricall y conductiv e composit e materials | Mass ratio of ion conduct ing compos ite materia ls | | | | | | |
| Example 1 | 100% | 0 | 0 | 100% | 40.12 | 1.20 | 4.50 | 91 | 89 | 82 |
| Example 7 | 95% | 5% | 0 | 100% | 40.52 | 1.19 | 4.45 | 90 | 90 | 82 |
| Example 8 | 100% | 0 | 5% | 95% | 40.27 | 1.23 | 4.52 | 90 | 89 | 81 |
| Example 9 | 97% | 3% | 3% | 97% | 40.59 | 1.18 | 4.38 | 91 | 89 | 83 |
| Example 10 | 90% | 10% | 10% | 90% | 40.56 | 1.16 | 4.40 | 90 | 88 | 82 |

It can be seen from Table 2 that when the coating layer has both the electrically conductive composite materials and the ion conducting composite materials, the materials show high electronic conductivity, ionic conductivity and good rate performance, and anode materials with good performance can be obtained by adjusting the mass ratio of the electrically conductive composite materials to the ion conducting composite materials in the coating layer.

The above examples are only intended to explain the technical solutions of the present disclosure, rather than limiting thereto. Although the present disclosure has been described in detail with reference to the preceding examples, those of ordinary skill in the art should understand that modifications can still be made to the technical solutions set forth in the preceding examples, or equivalent substitutions can be made to part of the technical features, and these modifications or substitutions do not make the essence of the corresponding technical solutions depart from the spirit and scope of the technical solutions in the examples of the present disclosure.

**Claims**

1. A silicon-carbon composite material for a secondary lithium battery, comprising a core containing a silicon-based material and its surface coating layers, including a first coating layer and a second coating layer, wherein the first coating layer is an electrically conductive layer, the second coating layer is an ion-conducting layer, and the first coating layer and the second coating layer are not limited to a certain order.

2. The silicon-carbon composite material for a secondary lithium battery according to claim 1, wherein the first coating layer comprises carbon composite material, or a combination of carbon composite material and ionic conductor composite material, and the mass percentage of the carbon composite material is 90 to 100%, as calculated by the total mass of the first coating layer of 100%.

3. The silicon-carbon composite material for a secondary lithium battery according to claim 1, wherein the second coating layer comprises ionic conductor composite material, or a combination of ionic conductor composite material and carbon composite material, and the mass percentage of the ionic conductor composite material is 90 to 100%, as calculated by the total mass of the second coating layer of 100%.

4. The silicon-carbon composite material for a secondary lithium battery according to claim 1, wherein the mass percentage of the silicon-based material core is 80 to 99%, as calculated by the total mass of the silicon-carbon composite material of 100%.

5. The silicon-carbon composite material for a secondary lithium battery according to claim 2 or 3, wherein the carbon composite material of the first coating layer comprises a carbon reinforcing phase and a carbon matrix, and the carbon reinforcing phase and the carbon matrix are compounded to form a reinforced concrete-like structure, preferably the mass ratio of the carbon reinforcing phase to the carbon matrix is 0.1 to 1:1, preferably the carbon reinforcing phase comprises one of or a combination of more of carbon nanotubes, carbon black, carbon fibers, graphene and porous carbon, preferably the carbon matrix comprises one of or a combination of more of asphalt carbon, resin carbon and gas phase pyrolysis carbon.

6. The silicon-carbon composite material for a secondary lithium battery according to claim 2 or 3, wherein the ionic conductor composite material of the first coating layer comprises an ionic reinforcing phase and an ionic matrix, and the ionic reinforcing phase and the ionic matrix are organically compounded to form a reinforced concrete-like structure, preferably the mass ratio of the ionic reinforcing phase to the ionic matrix is 0.1 to 1:1, preferably the ionic reinforcing phase comprises at least one of fibers, whiskers and particles, preferably the ionic matrix comprises fast ionic conductor material, and preferably the ionic matrix is one of or a combination of more selected from the groups consisting of LISICON type solid electrolyte, NASICION type solid electrolyte, perovskite type solid electrolyte, garnet type solid electrolyte, sulfide solid electrolyte, and PEO-based polymer electrolyte.

7. The silicon-carbon composite material for a secondary lithium battery according to claim 6, wherein the fibers comprise one or more selected from the groups consisting of aramid fibers, polyethylene fibers, nylon fibers, glass fibers, $Al_2O_3$ fibers, SiC fibers, BN fibers, $Si_3N_4$ fibers, TiC fibers, TiN fibers, $B_4C$ fibers and ceramic fibers; the whiskers are one or more selected from the groups consisting of SiC whiskers, $K_2TiO_3$ whiskers, aluminum borate whiskers, $CaSO_4$ whiskers, CaCOs whiskers, $Al_2O_3$ whiskers, ZnO whiskers and MgO whiskers; and the particles are one or more selected from the groups consisting of SiC particles, $Al_2O_3$ particles, BN particles, $Si_3N_4$ particles, TiC particles and $B_4C$ particles.

8. The silicon-carbon composite material for a secondary lithium battery according to claim 1 or 4, wherein the core further comprises lithium compounds, preferably the lithium compound comprises any one or more of $Li_2Si_2O_5$, $Li_2SiO_3$, and $Li_4SiO_4$, preferably the peak intensity attributing to $Li_2SiO_3$ at $2\theta=26.9\pm0.2°$ is the strongest in the x-ray diffraction with Cu-K$\alpha$ radiation.

9. The silicon-carbon composite material for a secondary lithium battery according to claim 1, wherein the thickness of the first coating layer is 2 to 1,000 nm, preferably 5 to 200 nm, and the thickness of the second coating layer is 1 to 100 nm, preferably 2 to 20 nm.

10. A method for preparing silicon-carbon composite material for a secondary lithium battery, wherein the method comprises the following processes: a precursor process, a coating process of a first coating layer, a pre-lithiation process and a coating process of a second coating layer;

the precursor process refers to chemical vapor deposition or high-temperature vacuum deposition of a silicon raw material to obtain a $SiO_x$ precursor, where $0<x<2$;
the coating process of the first coating layer refers to the coating of an electrically conductive layer to the $SiO_x$ precursor by a chemical vapor deposition method;
the pre-lithiation process refers to insertion of lithium into the above coated material and generation of lithium silicate inside the silicon oxide compound, and then obtaining lithium-doped active particles;
the coating process of the second coating layer refers to mixing the lithium-doped active particles with an ionic reinforcing phase and an ionic matrix, dispersing the mixture into pure water to obtain a mixed slurry, and then filtering the mixed slurry and drying to perform the coating of the ion-conducting layer;
alternatively,
the precursor process refers to chemical vapor deposition or high-temperature vacuum deposition of a silicon raw material to obtain a $SiO_x$ precursor, where $0<x<2$;
the coating process of the first coating layer refers to mixing the $SiO_x$ precursor with an ionic reinforcing phase and an ionic matrix, dispersing the mixture into pure water to form a mixed slurry, and then filtering the mixed slurry and drying to perform the coating of the ion-conducting layer;
the pre-lithiation process refers to insertion of lithium into the above coated material and generation of lithium silicate inside the silicon oxide compound, and then obtaining lithium-doped active particles; and
the coating process of the second coating layer refers to the coating of an electrically conductive layer to the lithium-doped active particles by a chemical vapor deposition method.

11. A method for preparing a silicon-carbon composite material for a secondary lithium battery, wherein the method comprises the following processes: a precursor process, a coating process of a first coating layer, and a coating process of a second coating layer;

the precursor process refers to chemical vapor deposition or high-temperature vacuum deposition of a silicon raw material to obtain a $SiO_x$ precursor, where $0<x<2$;
The coating process of the first coating layer refers to the coating of an electrically conductive layer to the $SiO_x$ precursor by a chemical vapor deposition method;
the coating process of the second coating layer refers to mixing the electrically conductive layer-coated $SiO_x$ precursor with an ionic reinforcing phase and an ionic matrix, dispersing the mixture into pure water to form a mixed slurry, and then filtering the mixed slurry and drying to perform the coating of the ion-conducting layer;
alternatively,
the precursor process refers to chemical vapor deposition or high-temperature vacuum deposition of a silicon raw material to obtain a $SiO_x$ precursor, where $0<x<2$;
the coating process of the first coating layer refers to mixing the $SiO_x$ precursor with an ionic reinforcing phase and an ionic matrix, dispersing the mixture into pure water to form a mixed slurry, and then filtering the mixed slurry and drying to perform the coating of the ion-conducting layer;
the coating process of the second coating layer refers to the coating of an electrically conductive layer to the ion-conducting layer-coated $SiO_x$ precursor by a chemical vapor deposition method.

Fig.1

Fig.2

Fig. 3

**INTERNATIONAL SEARCH REPORT**

| International application No. |
|---|
| **PCT/CN2021/097741** |

| A. | CLASSIFICATION OF SUBJECT MATTER |
|---|---|

H01M 4/36(2006.01)i; H01M 4/48(2010.01)i; H01M 4/62(2006.01)i

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 硅, 氧化硅, 负极, 包覆, 碳, 石墨, 石墨烯, 快离子, 导离子, 固体电解质, silicon, silicon oxide, negative electrode, anode, coat, carbon, graphite, graphene, fast ion, LISICON, NASICON, conductive ion, solid electrolyte

| C. | DOCUMENTS CONSIDERED TO BE RELEVANT |
|---|---|

| Category* | Citation of document, with indication, where appropriate, of the relevant passages | Relevant to claim No. |
|---|---|---|
| E | CN 113161528 A (TIANJIN EV ENERGIES CO., LTD.) 23 July 2021 (2021-07-23) description paragraphs 9-53, 81 | 1, 3 |
| PX | CN 111525121 A (LANXI ZHIDE NEW ENERGY MATERIALS CO., LTD.) 11 August 2020 (2020-08-11) description, paragraphs 3-40, and figures 1-5 | 1-11 |
| PX | CN 112018367 A (AMPRIUS NANJING CO., LTD.) 01 December 2020 (2020-12-01) description paragraphs 5-136, 159-162, figures 1-3 | 1-11 |
| PX | CN 112467108 A (DONGGUAN UNIVERSITY OF TECHNOLOGY) 09 March 2021 (2021-03-09) description, paragraphs 13-120, and figures 1-2 | 1-11 |
| PX | CN 111653759 A (NINGBO INSTITUTE OF MATERIALS TECHNOLOGY AND ENGINEERING, CHINESE ACADEMY OF SCIENCES et al.) 11 September 2020 (2020-09-11) description, paragraphs 5-121 | 1-11 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2021** | **26 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/097741** |

**C. DOCUMENTS CONSIDERED TO BE RELEVANT**

| Category* | Citation of document, with indication, where appropriate, of the relevant passages | Relevant to claim No. |
| --- | --- | --- |
| X | US 2018269483 A1 (NORTH CAROLINA AGRICULTURAL AND TECHNICAL STATE UNIVERSITY) 20 September 2018 (2018-09-20)<br>description paragraphs 3-36, 57-215, figures 1A-2C | 1-11 |
| X | CN 109728259 A (HUAWEI TECHNOLOGIES CO., LTD.) 07 May 2019 (2019-05-07)<br>description, paragraphs 5-86, and figures 1-2 | 1-11 |
| X | CN 109119617 A (HUAWEI TECHNOLOGIES CO., LTD.) 01 January 2019 (2019-01-01)<br>description, paragraphs 5-78, and figures 1-2 | 1, 3-4, 6-9 |
| A | CN 111048756 A (LANXI ZHIDE BATTERY MATERIAL CO., LTD.) 21 April 2020 (2020-04-21)<br>entire document | 1-11 |
| A | CN 106531992 A (SOUTH UNIVERSITY OF SCIENCE AND TECHNOLOGY) 22 March 2017 (2017-03-22)<br>entire document | 1-11 |
| A | CN 109301317 A (ZHEJIANG UNIVERSITY OF TECHNOLOGY) 01 February 2019 (2019-02-01)<br>entire document | 1-11 |

Form PCT/ISA/210 (second sheet) (January 2015)

INTERNATIONAL SEARCH REPORT
Information on patent family members

International application No.

**PCT/CN2021/097741**

| Patent document cited in search report | | | Publication date (day/month/year) | Patent family member(s) | | | Publication date (day/month/year) |
|---|---|---|---|---|---|---|---|
| CN | 113161528 | A | 23 July 2021 | None | | | |
| CN | 111525121 | A | 11 August 2020 | None | | | |
| CN | 112018367 | A | 01 December 2020 | CN | 112018367 | B | 30 March 2021 |
| CN | 112467108 | A | 09 March 2021 | None | | | |
| CN | 111653759 | A | 11 September 2020 | None | | | |
| US | 2018269483 | A1 | 20 September 2018 | US | 10879535 | B2 | 29 December 2020 |
| CN | 109728259 | A | 07 May 2019 | None | | | |
| CN | 109119617 | A | 01 January 2019 | EP | 3799161 | A1 | 31 March 2021 |
| | | | | WO | 2020042691 | A1 | 05 March 2020 |
| CN | 111048756 | A | 21 April 2020 | None | | | |
| CN | 106531992 | A | 22 March 2017 | CN | 106531992 | B | 20 August 2019 |
| CN | 109301317 | A | 01 February 2019 | CN | 109301317 | B | 02 February 2021 |